# EUROPEAN PATENT APPLICATION

(11) **EP 1 151 967 A1**
(43) Date of publication of application: **07.11.2001**
(21) Application number: 00931539.1
(22) Date of filing: 24.05.2000
(51) Int. Cl.: C02F 1/00, C02F 3/00, C12M 1/00

(54) **METHOD AND APPARATUS FOR TREATING CONTAMINATED MATERIAL CONTAINING ANIMAL OR VEGETABLE WASTE OIL OR THE LIKE**

(30) Priority: 24.05.1999 JP 14375999
(71) Applicant: Nakamura, Shozo, Minami-Saitama-gun, Saitama 345-0831 (JP)
(72) Inventor: Nakamura, Shozo, Minami-Saitama-gun, Saitama 345-0831 (JP)
(74) Representative: McCallum, William Potter
(86) International application number: JP0003314
(87) International publication number: WO0071466

(57) **Abstract**

According to the method for treating contaminants which include animal and vegetable waste oil, etc., kitchen wastewater of a hotel, restaurant, food service store, and the like will mainly be decomposed as a result of microorganism enzymes. Aliquid microorganism preparation which contains enzymes generated by anaerobic microorganisms, facultative anaerobic microorganisms and aerobic microorganisms will be propagated in a growth tank (15) to make microorganism enzyme water. The obtained enzyme water will be added to a grease trap (30) that retains kitchen water which includes macromolecular organic matter, such as animal and vegetable waste oil, and will be stirred with aeration so that the enzymes and the organic materials will be in contact in order to decompose the organic matter. The decomposition residue and sludge will be separated so as to flow the supernatant water to the sewer pipe.

## Description

### Technical Field

The present invention relates to a method and an apparatus for decomposing wastewater that includes mainly animal and vegetable waste oil, and small amounts of detergent, protein, starch, and refractory organic fiber, etc.

### Technical Background

Newly created chemical substances of waste, contamination and smell, which are produced in human habitats and industries, are usually very difficult to treat. However, existing organic materials should be easily decomposed as a part of the self-purification of the earth, such as through microbe actions. Conventionally, traditional foods such as miso (soybean paste), natto (fermented soybean), sake (alcohol), yogurt, and cheese are made by utilizing enzymes from microorganisms. It is desired to establish a waste purification method that will comply with the earth's natural recycling system by utilizing such microbes and enzymes.

When organic matter waste, especially kitchen wastewater from hotels, restaurants, and food services such as fast food chain stores, is treated, it is generally separated into insoluble matter and wastewater by storing it temporarily in a grease trap. Detergent having strong sterilizing power is used more frequently both in industries and in many households and its wastewater flows into organic treatment facilities, which causes microorganisms in those facilities to die. Organic matter includes easily decomposable parts such as protein, starch and refractory materials such as fiber, animal fat and vegetable oil. Such refractory organic substances are not decomposed completely but are accumulated. As a result, the air supply to aerobic microorganisms is prevented so that the propagation thereof is inhibited so that decomposition of easily decomposable organic matter is also inhibited. Thus, the capability of a purifying facility will be greatly decreased.

Fat is hydrolyzed by lipase and nuclease compounds, etc., but most fat splitting microorganisms are anaerobic. Thus, when mixed with a large amount of air, such anaerobic microorganisms will die. On the other hand, biological treatment of proteins will be generally carried out by hydrolyzing the peptide bonds by use of protease compounds.

Catalytic reactions of decomposing enzymes that are produced by microorganisms decomposing organic matter (protein, animal fat and vegetable oil) so that the chemical reaction of the organic matter is accelerated. As a result, it is decomposed to inorganic matter.

Under optimal conditions, microorganisms are cultured until the amount of which reaches into the hundreds of thousands and the yield of the enzymes also increases pro rata while it less than doubles under unsuitable conditions. In general, an adaptable environment for microorganisms is pH 6 to 8 and at a temperature 5 to 50 °C (for example, mesophile) while satisfactory catalytic reactions of enzymes can be seen pH 5.5 to 13 and at a temperature 5 to 7 °C (for example, lipase).

Under circumstances with strong bactericidal action, either microorganisms can not be cultured or enzymes are not generated. However, an enzyme itself is a substance and shows satisfactory catalytic action unless it is placed in an environment in which a protein, that is a composition of the enzyme, is varied.

### Summary of the Invention

The object of the present invention is to provide a method and an apparatus for treating wastewater that contains animal and vegetable waste oil, small amounts of detergent, protein, starch and refractory organic fibers, etc.

A first aspect of the present invention is directed to a method of decomposing organic matter by dripping a liquid microorganism preparation into a bio-growth tank to generate a large volume of microorganism enzymes; and adding or contacting thus obtained enzyme water to a grease trap or a place polluted with organic materials, such as waste oil from vegetables and animals, protein and starch, etc.

A second aspect of the present invention is directed to a decomposition treatment apparatus in which microorganism enzyme water is applied to a grease trap in which kitchen wastewater that contains animal and vegetable waste oil, protein, starch and the like temporarily resides or to an operation field in which organic matter is decomposed, said treatment apparatus comprising a liquid microorganism preparation tank (10); a bio-growth tank (15) to pre-generate microbe enzymes which are located under the microorganism preparation tank (10) and being connected thereto through a dripping pipe (12) which is introduced from the bottom of the microorganism preparation tank (10) and includes a dripping valve for the liquid concentrate (13); a water control valve (21) which controls the amount of water supply to the bio-growth tank (15); an open-close valve (23) provided at a delivery pipe (22) of the bio-growth tank (15); a grease trap (30) connected to the delivery pipe (22); a heater (18) located at the bottom within the bio-growth tank (15); a sensor group to detect the water level and the temperature and the like within the bio-growth tank (15); and a controlling system (24) comprising a controller (25) which is adapted to drive-control the dripping valve for the liquid concentrate (13), the water control valve (21), the open-close valve (23) and servo systems of an aeration pump (34) which is provided at the grease trap (30) and a timer which sets the stirring time and the temperature of the bio-growth tank (15) and indicates drive/stop of the pump to each of the servo systems.

According to one aspect of the present invention, wastewater which contains mainly animal and vegetable waste oil, for example, edible fat and oil, salad oil, deep-frying oil, lard, beef fat, shortenings, butter, margarine, mayonnaise, dressings, and chocolate and small amount of detergent, protein, starch and refractory organic fibers, etc. will be treated.

In order to accomplish the object of the present invention, microorganism are cultured under ideal circumstances so as to generate large amount of enzymes rather than delivering the microorganism directly to a decomposing field (grease trap). Thus obtained enzyme water is delivered to the location for degrading organic waste materials and then stirred, for example with aeration, so that organic compositions are exposed to the enzymes so as to be degraded.

Application of microorganisms must generate enzymes that correspond to the targeted organic matter for degradation. Enzymes have properties so as called substrate specificity, that is, one enzyme reacts toward only one substrate (in this specific case: organic matter). Therefore, it is necessary to generate as many kinds of enzymes as possible to decompose as many kinds of organic matter as possible. For this reason, preferably, aerobic bacteria, anaerobic bacteria and facultative anaerobic bacteria are mixed concurrently in it.

Since greater amounts of enzymes enable greater amounts of the substrates to degrade, a large quantity of enzymes is desired. Also, because the enzyme generation increases in proportion to the rise in the cell division speed, microorganisms (bacteria) that will grow faster in the culture should be selected.

Macromolecular organic materials, such as carbohydrates, proteins, animal and vegetable fats and oils, in the raw water are decomposed into organic acid groups, such as acetic acid, propionic acid and butyric acid and low-grade alcohol groups by the action of facultative anaerobic bacteria. Intermediate products in the organic acid groups are decomposed into methane, carbon dioxide, ammonia, etc. by the action of obligatory anaerobic bacteria. And they are further decomposed by the action of aerobic bacteria.

In the present invention, microorganisms (bacteria) are cultured under ideal circumstances so as to generate satisfactory enzymes. An enzyme itself is a substance and shows satisfactory catalytic action unless it is placed in an environment in which protein, that is a composition of the enzyme, will be varied.

Conventionally, waste oil at grease traps has been treated by increasing microbial activities by aeration for twenty-four hours. However, due to the influx of wastewater at the beginning of business operation, stirred fat and oil in the grease trap are washed out without having been treated. This looks as if the waste treatment at the grease trap would have been completed, but waste materials actually flow into piping, wastewater treatment tanks, sewage systems and rivers without having been treated, which is harmful. In the treatment according to the present invention, the amount of untreated materials can be reduced significantly in a short time in comparison to the conventional method. Therefore, stirring with aeration is not required during the business hours but will be commenced and completed only at night or after business hours.

Conventional waste treatment apparatus in which microorganisms are cultured require an activator to enhance activity. However; since microorganism preparation that has sufficient activity power is used in the present invention, it can eliminate an activator feeder.

When the previously proposed method for using a pulverulent microorganism preparation in a conventional apparatus is employed, it is difficult to control the humidity, and deterioration of the preparation occurs easily. Such disadvantages necessitated a complex device that requires large installation features and expensive manufacturing costs, which prevents the method from having widespread usage. According to the present invention, a compact apparatus can be manufactured inexpensively, which enables its widespread usage.

Further, since conventional waste treatment methods focus only on digestion at the grease trap, waste oil accumulates in the piping system, floor surface and side drain before reaching the grease trap so that the safety of operation is impaired while malodor is generated. On the other hand, in a system according to the present invention, a large volume of enzyme water is generated inexpensively and the apparatus can be used nearer place where waste oil is generated so that consistent treatment can be performed. Moreover, when the apparatus according to the present invention is used, enzyme coating is formed on the spot where it is applied, which prevents fat and oil from adhering so as to reduce cleaning labor, etc.

### Brief Description of the Drawings

Fig. 1 is a perspective view of the apparatus in accordance with one embodiment of the invention.

Fig. 2 is an enlarged sectional view of the enzyme water generator shown in Fig. 1.

Fig. 3 is a graph showing the relationship between pH change and activity of lipase.

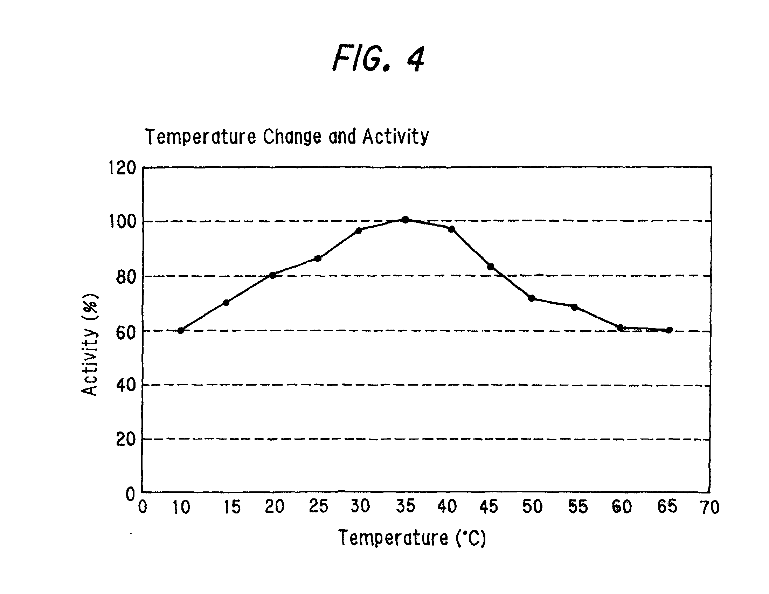

Fig. 4 is a graph showing the relationship between temperature change and activity of lipase.

### The Best Mode for Carrying out the Invention

In accordance with the present invention, a purification method for treating wastewater which works with the natural cycles of the earth will be established by extracting and using bacterial enzymes.

The system according to the invention will be described hereinafter:

### (A) The first process

A water pipe will be connected to an enzyme (enzyme water) generator, and the faucets of the pipes will be left open. If the water source contains any substance that has strong bactericidal action, such as chlorine, then any water purifier will be installed between the water source and the enzyme generator so as to protect the enzyme-producing bacteria. However, when the concentration of chlorine in the water is equal to that of water good for dranking, such installation is not necessary.

An open-close faucet to control water flow from the water pipe to the enzyme generator will be installed. Start time may be set by use of a timer so as to satisfy the user's demand. Once the timer operates, the water faucet of the enzyme generator will open so as to inject into the enzyme generator tank. When the water in the tank reaches the predetermined level, a sensor responds to it so that a magnetic valve will shut off the water faucet. To cope with failure of the sensor, the magnetic valve will close the water faucet automatically if the sensor does not work after a predetermined time has passed.

### (B) The second process

A heater in the enzyme generator tank will be energized so as to reach to the optimum temperature for culturing microorganism (bacteria). Since the surface temperature of the heater will increase to levels harmful towards most bacteria, the power of the heater will be shut off once it reaches a predetermined temperature. In order to cope with failure of the sensor, the heater will be turned off automatically if the sensor does not work after a predetermined time has passed.

### (C) The third process

An adequate amount of the liquid microorganism preparation will be injected into the tank. The injection amount of the microorganisms may be varied in response to the quantity of the organic matter (fat and oil) to be decomposed and to the difficulty of the degradation.

The microorganisms to be injected must generate enzymes that correspond to the targeted organic matter for degradation. Enzymes have properties so as called substrate specificity, that is, one enzyme reacts toward only one substrate (in this specific case: organic matter). Therefore, it is necessary to generate as many kinds of enzymes as possible to decompose as many kinds of organic matter as possible. For this reason, preferably, aerobic microorganisms, anaerobic microorganisms and facultative anaerobic microorganisms are mixed concurrently in it. Additionally, since greater amounts of enzymes enable greater amounts of the substrate to degrade, a large volume of enzyme is desired. Also, because the enzyme generation increases in proportion to the rise in the cell division speed, microorganism (bacteria) that will grow faster in the culture should be selected.

The above stated liquid microorganism preparation includes aerobic bacteria (for example, Baccillus Subtilis), anaerobic bacteria (for example, Rumenococcus Albus), facultative anaerobic bacteria (for example, Lactobacillus Acidophllus) and the like, said preparation generates enzymes, such as a fat splitting enzyme: lipase, a proteolytic enzyme: protease, an amylolytic enzyme: amylase, a vegetable fiber degrading enzyme: pectinase, a fibrous degrading enzyme: cellulase, a sugar degrading enzyme: beta-glucanase, polysaccharide degrading enzyme: hemicellulase, in which pH of the enzyme water is neutral.

According to the culture, enzymes are generated from the microorganisms (bacteria) to become enzyme water. The culturing time of bacteria will be predetermined. The culturing time may vary in view of that the culturing time varies in accordance with the microorganisms used. In order to culture anaerobic microorganisms that will decompose fat and oil matter, oxygen will not be supplied to the tank.

### (D) The fourth process

After a certain culturing time has passed, the faucet at the bottom of the tank will open so as to deliver the enzyme water to a tank installed below the generator by gravity drop due to the difference in elevation, by pump power or the like. Depending on the demand, it will be directly delivered to the floor, toilet, grease trap and/or wastewater treatment tank in which organic matter will be decomposed.

A series of processes from (A) to (D) will be set so as to be electrically controlled and repeated depending on the situation. This setting will be performed in either manner, for example, the first process starts at 9 pm, 10 pm, and 11 pm, respectively, or starts at 9 pm and runs for three cycles.

### (E) The fifth process

The enzyme water will simply be delivered to floor, toilet, bathtub and the like in which the enzyme can sufficiently contact the organic matter. However, as to the place, for example, a grease trap in which oil substances are separated, organic matter, such as the oil materials, must be contacted adequately with the enzyme.

When the enzyme water is delivered to the place, the aeration or stirring by a pump will be performed so as to bring the enzymes into contact with the substrates (organic materials). Now, oxygen can be supplied because the culture of anaerobic microorganism has been completed satisfactorily. At this time, it is advantageous to supply oxygen since it will help the decomposition performed by aerobic microorganism.

When the oil substances are solidified above the water surface level, they will not mix well with the enzyme water. Thus, it is required to perform an adequate contact therebetween, for example, by providing a sufficient number of air diffusing pipes or by sucking the enzyme water higher than the water surface level with a pump so as to shower the enzyme water on the organic materials. Starting time of a stirring pump, and the like can be set by sending signals from the enzyme water generator after the enzyme water has been discharged. Alternatively, the starting time can be set by setting another timer for the stirring pump in a separate circuit from the one for the enzyme water generator so as to activate the pump presuming the discharge time of the enzyme water. The operating time of the pump for aeration/stirring will become an important factor since it should avoid the time when the kitchen facility or the like is in use. A grease trap separates oil and water by using the difference of the specific gravity of each of them. When the kitchen is in use, newly discharged wastewater will flow into the grease trap where oil and water are stirred and aerated. As a result, the wastewater will be discharged before the decomposition treatment is completed, which results in problems such as environmental contamination and/or clogging of pipes.

In the above system it is of utmost importance to perform aeration/stirring while the kitchen facility or the like is not in use. The decomposition of organic matter has the capacity to reduce the normal-hexane concentration to 1/30 for 6 hours so that it will withstand the operation time limit of the pump.

Now, the invention will be explained in detail with reference to the accompanying drawings.

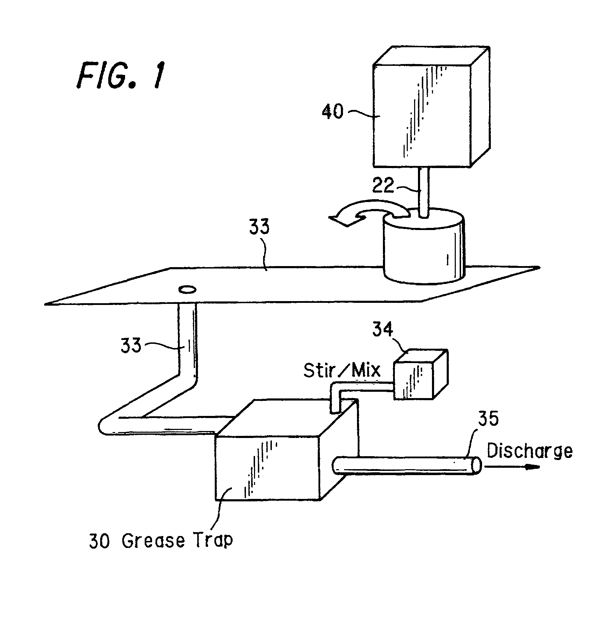

Fig. 1 is a perspective view of an apparatus in which the contaminants will be treated in a grease trap in accordance with one embodiment of the invention.

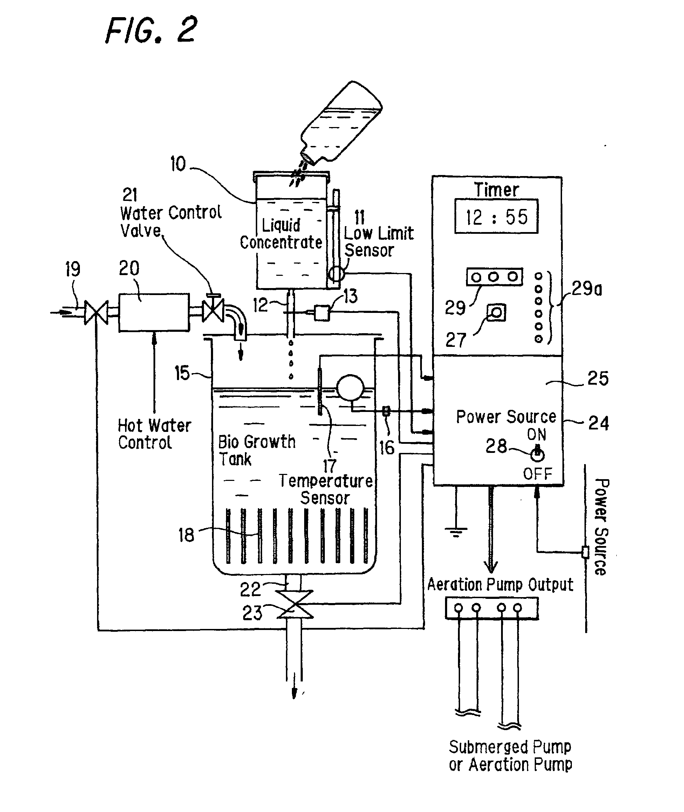

Fig. 2 is an enlarged sectional view of the enzyme water generator (40) shown in Fig. 1. As shown in the drawings, an enzyme water generator (40) comprises a liquid microorganism preparation tank (10); a bio-growth tank (enzyme water generator) (15) to pre-generate microbe enzymes which is located under the microorganism preparation tank (10) and being connected thereto through a dripping pipe (liquid concentrate supplying pipe) (12) which includes a dripping valve for the liquid concentrate (13); a water control valve (21) for controlling the amount of water supply from a water supply pipe (19), which is provided above the bio-growth tank (15); and a delivery pipe (22) having an open-close valve (23) provided at the bottom of the bio-growth tank (15).

A low limit sensor (11) is provided on the outer surface of the liquid microorganism preparation tank (10) into which the liquid concentrate will be dripped. The bio-growth tank (15) further comprises a float switch (16) which detects the water surface level and water temperature and a temperature sensor (17) both provided near the inner surface of the tank and a heater (a film heater) (18) which is fixed to the bottom in the tank. The delivery pipe (22) is connected to a grease trap (30) which retains wastewater from the kitchen facilities of a hotel, inn, restaurant and the like.

On the side of the bio-growth tank (15), there is provided a controlling system (24) which comprises a controller (25) which is adapted to drive-control the dripping valve for the liquid concentrate (13), the water control valve (21), the open-close valve (23) and servo systems for an aeration pump (34) which is provided at the grease trap (30); and a timer which sets the stirring time and the temperature of the bio-growth tank (15) and indicates drive/stop to each of the servo systems. In the drawing, reference numeral (26) shows a timer viewport, (27) and (28) show power switches, (29) shows a setting button, 29a shows a group of indicator lamps, such as supply of enzyme stock, supply/cut-off of water, abnormal condition of the heater, (33) shows a floor or a support plate with a drainage canal, and (35) shows a discharge pipe introduced from the grease trap, respectively.

Treatment processes of kitchen wastewater will be explained as follows:

The water supply pipe (19) will be connected to the enzyme water generator (bio-growth tank 15), and the water control valve (21) of the pipe (19) will be left open. Water to be supplied may contain a chlorine concentration equal to that of water for drinking. However, if it contains more chlorine than drinking water or other substances having bactericidal action, a water purifier (not shown) will be installed between the water supply pipe (19) and the growth tank (15) so as to protect the enzyme-producing microorganisms.

In order to comply with the circumstances of the user's facility, the starting time of the operation will be set by a timer. Once the timer activates, the dripping valve (13) of the liquid concentrate tank (10) will open so as to inject the enzyme water into the growth tank (15). The sensor (float switch 16) will be activated once the volume of the water in the tank (15) reaches the predetermined level so as to close the water control valve (21).

The heater (film heater 18) in the growth tank (15) will be energized until it reaches the optimum culture temperature (35°C to 45°C) for microorganism growth. Since the surface temperature of the heater will increase to levels harmful towards most bacteria, the power of the heater will be shut off once it reaches a predetermined temperature.

Then, adequate amounts of microorganisms will be injected into the growth tank (15). The amounts of the microorganisms to be injected may vary depending on the amount of macromolecular organic matter (animal and vegetable fat and oil, etc.) to be decomposed or the difficulty of the degradation.

The microorganism to be injected must generate enzymes that correspond to the targeted organic matter for degradation. In order to decompose more kinds of organic materials, it is desirable to mix aerobic microorganisms, anaerobic microorganisms and facultative anaerobic microorganisms concurrently. Additionally, since greater amounts of the enzymes enable greater amounts of the substrates to degrade, a large quantity of enzymes is desired. Also, because the enzyme generation increases in proportion to the rise in the cell division speed, microorganisms (bacteria) that will grow faster in the culture should be selected.

According to the culture, enzymes are generated from the microorganisms to become enzyme water. The culturing time of bacteria will be predetermined. The culturing time may vary in view of that the culturing time varies in accordance with the microorganisms used. In order to culture anaerobic microorganisms that will decompose fat and oil matter, oxygen will not be supplied to the tank (15).

After a certain culturing time has passed, the open-close valve (23) of the enzyme water delivery pipe (22) of the tank (15) will open so as to deliver the enzyme water to the operation field (the grease trap 30) where the degradation of organic materials will be performed, the wastewater treatment tank or the like, by gravity drop due to the difference in elevation or by pump power, etc.

When the enzyme water is delivered to the field, the aeration or stirring by a pump (not shown) will be performed so as to contact the enzymes with the substrates (organic materials). Now, oxygen can be supplied because the culture of anaerobic microorganisms has been completed satisfactorily. At this time, it is advantageous to supply oxygen since it will help the decomposition performed by aerobic microorganisms.

When the oil substances are solidified above the water surface level, they will not mix well with the enzyme water. Thus, it is required to perform an adequate contact therebetween, for example, by physically breaking down the solidified substances, or by sucking the enzyme water higher than the water surface level by a pump so as to shower the enzyme water on the organic materials.

In such a manner, the enzyme water will be added to the grease trap in which kitchen wastewater which contains macromolecular organic matters, such as animal and vegetable waste oil is retained, and will be stirred by aeration so that the enzymes and organic materials will be in touch and decomposition will take place. Then, the residue of the decomposition, sludge, and the like, will be separated and the supernatant water will flow into a sewer pipe.

Subsequent processes from the injection of the enzyme water to the discharge of the enzyme water will be controlled by the control system and will be repeated depending on the situation. The following two methods will be employed: one method is to set the starting time, for example, it will start at 9 pm, 10 pm, and 11 pm, respectively; the other method is to start at 9 pm and repeat twice thereafter. The starting time of the stirring pump and the like can be set by sending signals from the enzyme water generator when to start the discharge of the enzyme water by opening the open-close valve (23). Alternatively, the starting time can be set by setting another timer for the stirring pump in a separate circuit from the one for the growth tank (15), which will generate the enzyme water, so as to activate the pump presuming the discharge time of the enzyme water.

Next, the capability of the enzyme water generator (40) will be explained.

### (Enzyme water generating capacity)

140 liters / day (4 liter × 35) at Water Temperature of 15°C, Adjustment of Concentration: Standard ∼ +1300%, Supply of Enzyme Concentrate: Once in 6 months (based on use of 70 liters / day)

### (Wastewater treatment capacity)

Nominal Concentration: Normal Hexane (oil) 25,000 ppm, Amount of Enzyme Water to be used : Not fewer than 5 liters per wastewater 100 liters, Treatment Time: 3 ∼6 hours, Treatment Capacity: 95∼98 % Reduction

### (Control)

CPU: 16 bit, Bio-Control: 2 systems, External Timer: 2 systems (each of On/Off, twice a day),
Power Source: AC100V/1500W,
Power Consumption: Standby: 10W, Maximum: 800W. External Output: 700W (total of two systems)
Dimension: 300 cm (width) × 570 cm (height) × 250 cm (length)

### (Contents to be set)

Present Time: Power On, Set up by a Set Selector (following will be set: two cycles/day)

Starting Time (Starting of enzyme water generation), Bio-Volume (the concentration of "Liquid Concentrate of enzyme"), Bio-Turn (4 liters per one generation of enzyme water), Bio Temperature (Culturing Temperature), Pump Timer (Set the Start/Stop Time of the External Output), All Clear (Mode + Power On), (Push the button in a sequential order) Mode + Select: Water Valve, Mode + Set: Discharge Valve, Mode + Start: Pump Output, Mode + Select + Set: Dripping Valve.

### (Set Point)

Runaway Water Supply Limit: 5 minutes, Runaway Heater Limit: 20 minutes, Culturing Time: 20 minutes, Discharging Time: 8 minutes, Temperature: 35∼45°C

### (Installation)

Water supply:
1. Branch a water line and arrange plumbing with faucet
2. Adjust water volume by a water supply cock in the system

Adjustment of the system:
1. Plug into socket and Power on.
2. Add "Liquid Concentrate of enzyme"
3. Set the present time
4. Test (Water supply valve, Discharge valve, Dripping valve)
5. Set up the Set 1(Starting time, Frequency), Volume and Temperature will be set at standard mode
6. Set up the Set 2 (this will be an option in case of when the enzyme water is made twice a day)
7. Set Pump Timer 1. This will be set between the time when the task completes and when the task starts. (6∼8 hours, the longer the better)
8. If the setting time of the timer 1 is too short to decompose completely, timer 2 will be set.

### Embodiment

Wastewater from kitchen facilities, such as restaurants and food service stores that contain animal and vegetable waste oil, protein and starch will be temporarily retained in a grease trap and will be mixed with microorganism enzyme water for decomposition treatment.

Examples of major components of the enzyme water are as follows:
A fat splitting enzyme: lipase, a proteolytic enzyme: protease, an amylolytic enzyme: amylase, a vegetable fiber degrading enzyme: pectinase, a fibrous degrading enzyme: cellulase, a sugar degrading enzyme: beta-glucanase, a polysaccharide degrading enzyme: hemicellulase. The pH of the enzyme water is neutral.

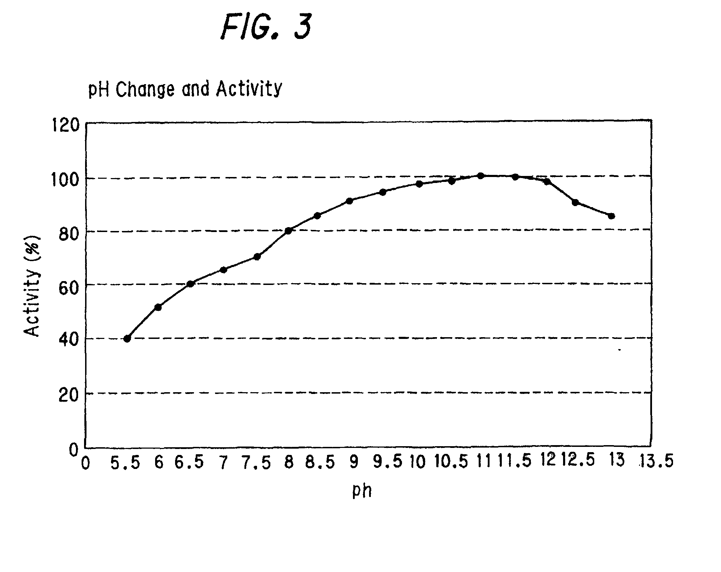

Usable pH range of detergent: 5.5-13.5 (see Fig. 3: Activity power according to the change of pH).

Flow of the treatment is shown in Fig. 1. Oil will be accumulated on kitchen floor surface due to repeated daily work. However, lipase, a fat splitting enzyme, gradually decomposes oils remaining on the floor surface or in the pipes. An enzyme coat will be formed on the floor surface or in the pipes by continuous application of the enzyme water, which prevents oil substances from attaching.

Malodor results from the propagation of miscellaneous fungi in protein and oil residue of food. By applying various enzymes, the nutrient sources of miscellaneous fungi will be degraded so as to eliminate the causes of odor. In general, a strong surface active agent or alkaline detergent is used to treat oils. However, pH of the enzyme water is neutral.

Human skin cells will die naturally after a certain period has passed. Enzymes will decompose these dead cells. An enzyme, itself, consists of protein but will not be degraded while it is active. Thus, enzymes have properties, so called substrate specificity, by which they are only responsive to specific substances.

Now, the field test for oil removal off the kitchen floor will be described.
Grease trap: In-place tests (6 hours treatment)
- Normal hexane:: 24,000 ppm → 880 ppm
- BOD:: 6,700 ppm → 2,650 ppm
- SS:: 6,870 ppm → 498 ppm

- October 18th (Saturday): Application of enzyme water is started. 11:30 am
   Location: Kitchen of a take-out food store. All over the floor is covered with thin oil layer. (Although non-skid surface treatment has been applied, the floor is very slippery.)
- October 25th (Saturday): Test period is one week. 8:00 pm
   Location: The kitchen (Just before the close time after having used oils all day long)
   1. The oil on the floor has been removed and the enzyme coat has been formed.
   2. The residue oil of the day has been decomposed and no oil is observed on the floor.
Grease trap: field test
- December 10th to 11th, 1998
   Location: Kitchen of a take-out food store (Mainly deep fried food).
   Status quo of the tested grease trap:
   1) Capacity: approximately 250 liters
   2) Accumulation: approximately 150 liters
   3) Volume of waste oil: several liters /day
   4) N-hexane concentration: 24,000 ppm at the time of stirring

### Test method

1) Stir pre-treatment wastewater for a few minutes, then mix oil and wastewater Sample as raw water for test (December 10th, 8:00 pm)
2) Start treatment by the timer setting (December 10th, 10:00 pm)
3) Complete the treatment 6 hours later by the timer setting (December 11th, 4:00 am)
4) Stir treated wastewater for a few minutes and mix. Sample as treated test water (December 11th, 7:40 am)
5) Bring the pre-treatment raw water and post treatment water to Testing Association (December 11th, 9:00 am)
   Note: Daily Detergent has been used (No change in using method)
   For disinfection: alcoholic (J&J)
   For oil treatment: alkaline (J&J)

### Other use of the enzyme water

### 1. Kitchen facilities of a restaurant, a foodservice store, etc.

Treatment and prevention of oil substances from adhering on kitchen floors, restaurant floors, tables, chairs, insides of piping, grease traps and other places where oil substances may attach, kitchen facilities in restaurants, food service stores and grocery stores.

If chairs and tables are wiped off with the enzyme water, enzyme coating will be formed thereon so that the labor for cleaning or the like will be reduced. If the enzyme water is sprinkled on the floor, accumulated oil will be decomposed and the enzyme coating will be formed thereon so that the malodor will be prevented as well as the safety of the employees and the customers will be secured.

If the enzyme water is sprinkled over a drain ditch or in piping, the accumulated oil will be degraded, which prevents clogging. The enzyme water delivered to a grease trap will be aerated and stirred and will then be decomposed into water and carbon dioxide. Since the treatment of waste oil recovered from grease traps has become a problem in view of the environment, this invention will contribute positively toward the environment. Further, such decomposition will be performed without using strong alkaline detergents or surface-active agents. Thus, it is not harmful to employees.

### 2. Bathing facilities of a public bath, a spa, a hotel, a hot spring, etc.

Adding the enzyme water to a bath will decompose waste products, such as oils and proteins sloughed off from human bodies. As a result, it can prevent the bathtub or floor from becoming slimy, which reduces the need for cleaning. It removes sliminess and oil residue in the pipes, which are organic materials, and prevents odor from being generated. Due to the decomposition of wastes that would be a hotbed of fungi growth, the hot water in the tub will be maintained clean without malodor. Thus, the frequency to change the bathtub hot water can be minimized. This will contribute towards saving energy and economic benefits can be expected as a result.

### 3. Wastewater treatment tank facilities

When the enzyme water is applied to a toilet, a grease trap, a sewer trap, pluming and other facilities equipped with toilets or equipped with a wastewater treatment tank which does not work well, the malodor will be removed and/or prevented.

Most of the wastewater treatment system adapts the active sludge method in which aerobic microorganisms are activated so as to decompose organic materials by the microorganism enzyme action. However, in recent years, a large amount of bactericide has been used in kitchens and with toilets, which weakens the activity of bacteria in the treatment tank system. For this reason, the treatment capacity of such facilities has been decreased. On the other hand, according to the system of the present invention, environmentally friendly microorganisms will be delivered so as to greatly improve the treatment capacity of the wastewater. In general, the optimal pH range for bacteria is neutral (6 ∼ 8). However, the enzymes generated from the bacteria can maintain their activity between pH 5.5 ∼ 13.5 (see Fig. 3∼4, lipase (liquid) graph).

### 4. Urolith in the toilet.

Urolith in a toilet bowl is generated by the organic matter from human body and adhered to the bowl by fat substances. This will be decomposed by daily application of the enzyme water.

### 5. Auxiliary decomposition for kitchen refuse disposing system

Recently, quite a few kitchen wastes disposing systems have been developed. Among those systems, the bacterial breakdown system has drawn considerable attention. The decomposition treatment by bacteria uses aerobic microorganisms to decompose wastes into water and carbon dioxide, which results in waste reduction. However, due to the air shutoff to the treatment tank, the environment of the whole tank becomes anaerobic such that organic acid is generated which results in malodor and the volume of the waste is not reduced. To solve these problems, the system according to the present invention proposes to deliver the enzyme water to the kitchen waste disposing device in order to assist the decomposition of oil substances.

### 6. Auxiliary decomposition for other organic materials treatment system

If the enzyme water according to the present invention is applied to laundry, it will prevent the generation of malodor. The propagation of miscellaneous fungi, such as Staphylococcus Aureus, will cause odors generated from the clothes dried in a room. Thus, suppressing the propagation will prevent the generation of malodor. When the enzyme water is applied to kitchen towels, dishcloths and other laundry, the malodor will not be generated.

Recently, enzymes have been used in various fields in view of their safety to the human body and the environment, as well as the capacities in which they may be utilized. For example, when an enzyme is added to detergent, it will activate the breakdown of stains. When it is added to toothpaste, it will enhance the decomposition of bacterial plaque and prevent plaque from adhering because of the coating effect. Further, if an enzyme is added to a health food, it will contribute towards better digestion.

However, because enzymes are expensive, only a small amount will be used for supporting purposes. When a liquid microorganism preparation (Maycome Co., Ltd. trade name: M-zyme L-1) is used, the enzyme water can be generated at an inexpensive cost (JP¥9 per liter). In addition, various enzymes, such as lipase that decomposes refractory oil substances, and proteolytic enzymes, which decompose proteins, will be generated simultaneously. For this reason, enzymes can now take the place of strong alkaline cleansers that have been used to remove oil substances and urolith from toilet bowls. Alkaline detergents have been conventionally used because of their cost performance but are considered to be harmful to the human body.

The surface-active agent commonly used in detergents adapts to detach and wrap the oil substance. Then it will be discharged to nature, expecting to be decomposed by microorganisms. On the other hand, enzymes will perform even under particular circumstances, for example, a strong alkaline environment. When any chemicals such as bactericidal detergent, strong alkaline detergent, surface active agent, or antibiotic flow into wastewater treatment systems or into grease traps, or the like, these chemicals will destroy microorganisms so that the decontaminating function will be severely decreased. However, because the enzyme is not an organism, it can decompose waste to the inorganic level, becoming nutrients to plants even under certain circumstances such as when detergents are used.

The surface-active agent has a seepage force in the human body in which it reaches the blood vessels in a relatively short time and is absorbed. Oil removing alkaline detergents are designated as a hazardous material and require the use of gloves when handling. When the toilet cleaning detergent that has a strong odor is used, the human body will absorb it rapidly because of its high volatility. On the other hand, the enzyme does not respond to living cells, but responds only to dead cells according to its substrate specificity. If we keep using the enzyme water, we will find skin becomes smooth. This is because the enzyme water peels off the keratinized skin and the fresh skin is revealed.

Furthermore, the enzyme decomposes food for miscellaneous bacteria to suppress its propagation. The reason a wet cloth or laundry becomes smelly is that the bacteria, for example, Staphylococcus Aureus, is propagated. The use of the enzyme water will prevent the malodor since it will suppress the propagation by decomposing the protein that is the food for the bacteria. Because most chemical substances will not be decomposed in nature, they travel up the food chain to be biologically concentrated and their accumulation in the human body is becoming a problem. Enzymes are made of proteins and are decomposed into inorganics when no longer active, and then may be used as nutrients for plants in nature.

### Industrial Applicability

As described above, the present invention comprises the steps of dripping a liquid microorganism preparation into a bio-growth tank to generate microorganism enzyme water; adding the enzyme water to a grease trap or the like which retains kitchen wastewater which includes macromolecular organic matter, such as waste oil from vegetables and animals; stirring with aeration so as to contact the enzyme and the organic materials to decompose; and separating the residue and sludge so as to flow the supernatant water to the sewer pipe. According to the invention, not only easily decomposable protein and starch, but also refractory organic fiber and animal and vegetable oil will be decomposed due to the propagation of aerobic microorganisms through the supply of oxygen. As a result, the capacity of any purifying facility will not be attenuated while the negative effects to the environment will be minimized.

## Claims

1. A method for treating contaminants which include animal and vegetable waste oil and the like comprising the steps of generating a large volume of microorganism enzymes by dripping a liquid microorganism preparation into a bio-growth tank; adding or contacting the obtained enzyme water to a grease trap or a place polluted with organic materials, such as animal and vegetable waste oil, protein, and starch so as to decompose the organic materials.

2. A method for treating contaminants according to claim 1 in which the liquid microorganism preparation includes aerobic bacteria (for example, Baccillus Subtilis), anaerobic bacteria (for example, Rumenococcus Albus), facultative anaerobic bacteria (for example, Lactobacillus Acidophllus) and the like, said preparation generates enzymes, such as a fat splitting enzyme: lipase, a proteolytic enzyme: protease, an amylolytic enzyme: amylase, a vegetable fiber degrading enzyme: pectinase, a fibrous degrading enzyme: cellulase, a sugar degrading enzyme: beta-glucanase, and a polysaccharide degrading enzyme: hemicellulase, in which the pH of the enzyme water is neutral.

3. An apparatus for decomposition treatment of wastewater in which microorganism enzyme water is applied to a grease trap in which kitchen wastewater that contains animal and vegetable waste oil, protein, starch and the like temporarily resides or to an operation field in which organic matter is decomposed, said treatment apparatus comprising a liquid microorganism preparation tank (10); a bio-growth tank (15) to pre-generate microbe enzyme which is located under the microorganism preparation tank (10) and being connected thereto through a dripping pipe (12) which is introduced from the bottom of the microorganism preparation tank (10) and includes a dripping valve for the liquid concentrate (13); a water control valve (21) which controls the amount of water supply to the bio-growth tank (15); an open-close valve (23) provided at a delivery pipe (22) of the bio-growth tank (15); a grease trap (30) connected to the delivery pipe (22); a heater (18) located at the bottom within the bio-growth tank (15); a sensor group to detect the water level and the temperature and the like within the bio-growth tank (15); and a controlling system (24) comprising a controller (25) which is adapted to drive-control the a dripping valve for the liquid concentrate (13), the water control valve (21), the open-close valve (23) and servo systems of an aeration pump (34) which is provided at the grease trap (30) and a timer which sets the stirring time and the temperature of the bio-growth tank (15) and indicates drive/stop of the pump to each of the servo systems.
